# FASCICULE DE BREVET EUROPEEN

(11) **EP 0 546 950 B1**
(45) Date de publication et mention de la délivrance du brevet: **21.08.1996**
(21) Numéro de dépôt: 92403368.1
(22) Date de dépôt: 11.12.1992
(51) Int. Cl.: B29C 45/33, A01G 9/02

(54) **Procédé de fabrication d'un objet en matière plastique moulée comprenant un pied en forme de soucoupe**
Verfahren zur Herstellung eines Formteils aus Kunststoffmaterial mit einem Fussteil in Form einer Untertasse
Process of manufacturing a moulded article of plastic material, having a base in the form of a saucer

(30) Priorité: 12.12.1991 FR 9115539
(43) Date de publication de la demande: 16.06.1993
(73) Titulaire: SOPARCO S.A., F-61110 Remalard (FR)
(72) Inventeur: Laguerre, Maxime, F-61110 Remalard (FR); Cohu, Philippe, F-61110 Bretoncelles (FR)
(74) Mandataire: de Saint-Palais, Arnaud Marie

(56) Documents cités:
- EP-A- 0 351 030
- EP-A- 0 381 023
- GB-A- 858 887
- US-A- 4 375 265

## Description

La présente invention concerne un procédé de fabrication d'un objet en matière plastique tel que, par exemple, un récipient, présentant un pied en forme de soucoupe incorporée.

Elle s'applique dans de nombreux domaines tels que, par exemple, l'horticulture.

Ainsi, dans ce type d'application, l'objet en matière plastique peut consister en un pot de culture ou une suspension, avec soucoupe intégrée.

D'une manière générale, on sait qu'il a déjà été proposé, notamment par le brevet EP 0 351 030, des procédés de fabrication de pots horticoles permettant d'obtenir le pot et la soucoupe en une seule opération de moulage.

Toutefois, compte tenu de la complexité de forme de cet ensemble, notamment dans la zone intermédiaire située entre le corps du pot et la soucoupe, les moules utilisés sont relativement complexes, coûteux, et peu adaptés à des productions industrielles à cadence élevée.

L'invention a donc plus particulièrement pour but de supprimer ces inconvénients.

A cet effet, elle part de la double constatation que :
- la réalisation par moulage d'objets en matière plastique présentant un pied en col de cygne était parfaitement maîtrisée, et ce, à des cadences élevées et à des coûts relativement bas,
- la forme en col de cygne réalisée en un matériau élastique ou semi-élastique constitue un dispositif mécanique bistable (forme en col de cygne) à un second état stable en forme de cuvette, grâce à un retroussement au cours duquel il se produit une inversion de concavité après un franchissement d'un point mort.

Bien entendu, ce dispositif peut retourner à son état initial en exerçant une action permettant d'effectuer un franchissement du point mort en sens inverse.

Par la demande de brevet EP-O-0 381 023, on a déjà proposé d'exploiter ces caractéristiques en vue de réaliser par moulage un pot horticole du type susdit, grâce à un procédé comprenant successivement une phase de moulage présentant un pied en col de cygne suivie d'une phase de retroussement dudit pied.

Toutefois, compte tenu des contraintes dues à la rigidité de la matière plastique utilisée, ce document propose soit d'effectuer la phase de retroussement à chaud, soit de réaliser à la base de la forme en col de cygne un amincissement constituant charnière.

Il s'avère que la première solution accroît la complexité du processus de réalisation, tandis que la seconde solution ne résout pas le problème résultant des contraintes exercées par la forme en col de cygne, lors de son retroussement.

L'invention propose donc un procédé de fabrication d'un objet en matière plastique tel qu'un pot horticole comprenant un corps et un pied en forme de soucoupe incorporé au corps, ce procédé comprenant les phases suivantes :
- une première phase consistant à mouler le corps avec un pied incorporé en forme de col de cygne comprenant une forme tubulaire présentant des propriétés de déformation bistable, cette forme étant dans un premier état stable dans lequel elle s'étend en s'évasant vers le bas,
- une seconde phase consistant à retrousser ladite forme tubulaire pour l'amener à un second état stable avec inversion de concavité et obtenir ainsi un pied en forme de soucoupe.

Selon l'invention, ce procédé est caractérisé en ce que le pied comprend une portion tubulaire dont une extrémité est solidarisée audit corps, tandis que l'autre extrémité est prolongée par ladite forme tubulaire, de manière à ce que l'étape de retroussement puisse s'effectuer à l'extérieur du moule par une action purement mécanique provoquant ladite inversion de concavité après passage d'un point mort.

Bien entendu, l'invention concerne également les objets réalisés conformément au procédé selon l'invention.

De tels objets pourront par exemple comprendre un corps constituant un récipient tubulaire muni d'un fond sur lequel vient se raccorder un pied comportant une première portion tubulaire sensiblement coaxiale au corps et prolongée par une deuxième portion élastiquement déformable, de façon bistable, cette deuxième portion présentant, soit une forme en col de cygne s'évasant vers le bas, soit une forme s'évasant vers le haut qui constitue sous le corps une cuvette annulaire assimilable à une soucoupe.

Un mode d'exécution du procédé selon l'invention sera décrit ci-après, à titre d'exemple non limitatif, avec référence aux dessins annexés dans lesquels :
La figure 1 est une représentation schématique en coupe axiale d'un pot horticole avec un pied en col de cygne incorporé, obtenu à l'issue de la première phase du procédé selon l'invention ;
La figure 2 est une vue du pot horticole représenté figure 1, après retroussement du pied pour obtenir une soucoupe incorporée.

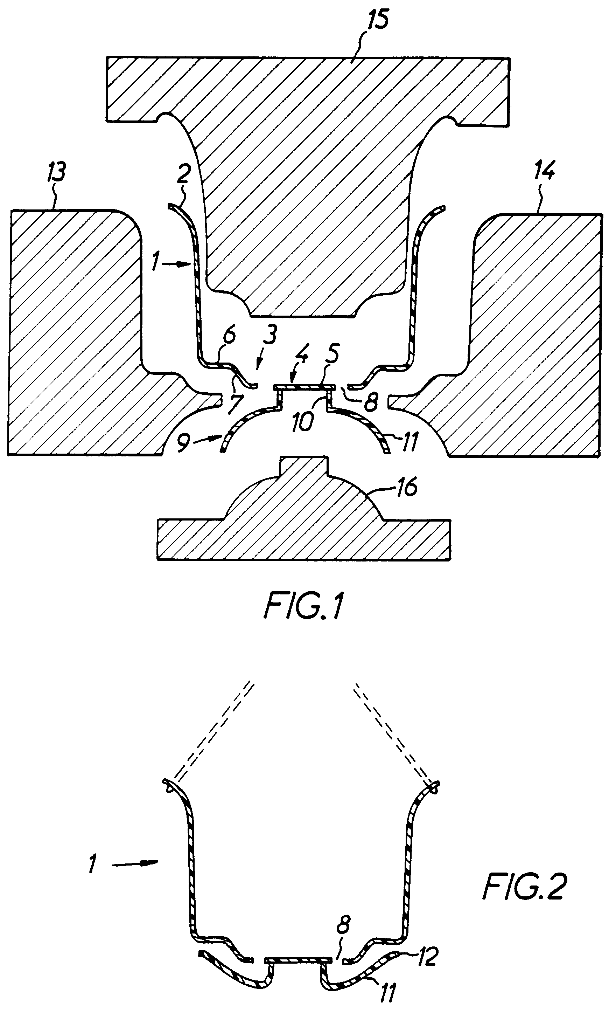

Dans cet exemple, le pot horticole que l'on désire obtenir (figure 2) comprend un corps tubulaire 1 de forme sensiblement cylindrique (avec, cependant, une légère conicité pour la dépouille) dont la partie supérieure 2 est légèrement évasée, tandis que la partie inférieure 3 est terminée par un fond 4 comportant deux parties 5, 6 étagées l'une par rapport à l'autre et raccordées l'une à l'autre par une portion incurvée 7. La partie latérale 6 présente une forme coronale, tandis que la partie centrale 5, en forme de disque, comprend dans une région proche de sa périphérie, une série de perçages 8.

Sur la partie centrale 5 vient se raccorder un pied 9 servant de soucoupe qui comprend une portion tubulaire, cylindrique, 10 de diamètre inférieur à celui de la partie centrale 5, et qui s'étend coaxialement au corps 1. La partie supérieure de cette portion tubulaire 10 est solidarisée à la partie centrale 5, tandis que sa partie inférieure 11 forme un évasement remontant vers le haut qui se termine par un bord 12 situé à une hauteur légèrement supérieure à celle de la partie centrale 5, sensiblement au droit de la partie cylindrique du corps 1. En fait, ce pied forme donc une cuvette annulaire assimilable à une soucoupe.

Bien entendu, le corps 1 du pot est destiné à recevoir de la terre ou analogue, la soucoupe servant à recueillir l'eau s'échappant des perçages 8 dont le rôle est alors d'assurer un drainage (et qui se trouvent donc au-dessus de la cuvette annulaire).

A l'inverse, cette soucoupe, une fois remplie, peut servir à l'arrosage du fait que les orifices 8 sont situés à un niveau inférieur à celui du bord 12. Dans ce cas, l'eau remonte par capillarité à l'intérieur de la terre contenue dans le corps 1. Ce processus d'arrosage peut être amélioré en utilisant des cordons en matière fibreuse passant au travers des perçages 8 et se plongeant jusqu'au fond de la soucoupe.

Le pot précédemment décrit peut être utilisé en tant que suspension. Dans ce cas, l'ensemble pot/soucoupe est suspendu, grâce à des éléments de suspension, par exemple des tringles (indiquées en traits interrompus sur la figure 2) venant se fixer sur la partie évasée 2 du corps tubulaire 1.

Comme précédemment mentionné, la fabrication de l'ensemble pot/soucoupe s'effectue en deux étapes à savoir : une étape de moulage d'un pot muni d'un pied (ou piédouche) en forme de col de cygne, et une étape dans laquelle on retrousse le pied pour obtenir la soucoupe.

L'étape de moulage s'obtient au moyen d'un moule de type classique formé de :
- deux demi-noyaux 13, 14 en forme de demi-coquilles qui épousent les formes latérales du pot,
- un noyau central 15 dont la forme est complémentaire à celle de la surface intérieure du pot, et
- un noyau de base 16 dont la forme épouse celle de la concavité délimitée par le pied 9.

Il convient de noter que la forme du pied 9 est spécialement étudiée pour obtenir un processus de déformation bistable par retournement avec inversion de concavité, après passage d'un point mort.

L'étape de retroussement s'effectue à l'extérieur du moule par un appareillage relativement simple, purement mécanique, et dont la cadence n'est jamais inférieure à celle du moule (pour ne pas ralentir la cadence de ce dernier).

Cet appareillage pourra comprendre des moyens permettant de maintenir le corps et des moyens permettant d'engendrer un déplacement relatif de la base du pied en direction dudit corps.

Bien entendu, l'invention ne se limite pas à la forme du pot précédemment décrit : de nombreuses variantes peuvent être réalisées, en prenant en compte :
- l'intérêt d'avoir un niveau d'eau visible,
- la nécessité de pouvoir empiler les pots,
- des considérations esthétiques.

Par ailleurs, le procédé selon l'invention est applicable sur des formes polygonales, par exemple carrées ou rectangulaires (par exemple pour réaliser des jardinières ou des balconnières à réserve d'eau).

On notera enfin que le pot peut être vendu et/ou livré avec le piédouche rebroussé ou non, éventuellement en fonction du type de conditionnement utilisé.

## Revendications

1. Procédé de fabrication d'un objet en matière plastique tel qu'un pot horticole comprenant un corps et un pied en forme de soucoupe incorporé au corps, ce procédé comprenant les phases suivantes :
- une première phase consistant à mouler le corps (1) avec un pied (9) incorporé en forme de col de cygne comprenant une forme tubulaire présentant des propriétés de déformation bistable, cette forme étant dans un premier état stable dans lequel elle s'étend en s'évasant vers le bas,
- une seconde phase consistant à retrousser ladite forme tubulaire (11) pour l'amener à un second état stable avec inversion de concavité et obtenir ainsi un pied (9) en forme de soucoupe,
caractérisé en ce que le pied comprend une portion tubulaire (10) dont une extrémité est solidarisée audit corps, tandis que l'autre extrémité est prolongée par ladite forme tubulaire (11) de manière à ce que l'étape de retroussement puisse s'effectuer à l'extérieur du moule par une action purement mécanique provoquant ladite inversion de concavité après passage d'un point mort.

2. Procédé selon la revendication 1,
caractérisé en ce que le susdit corps (1) est un récipient.

3. Procédé selon l'une des revendications 1 et 2,
caractérisé en ce que le moulage effectué dans la première phase s'effectue au moyen d'un moule comprenant :
- deux demi-noyaux (13, 14) en forme de demi-coquilles qui épousent les formes latérales du pot,
- un noyau central (15) dont la forme est complémentaire à celle de la surface intérieure du pot, et
- un noyau de base (16) dont la forme épouse celle de la concavité délimitée par le pied (9).

4. Procédé selon l'une des revendications précédentes,
caractérisé en ce que la susdite phase de retroussage est effectuée à l'aide d'un appareillage purement mécanique comprenant des moyens permettant de maintenir le corps et des moyens permettant d'engendrer un déplacement relatif de la base du pied (9) en direction dudit corps (1).

5. Objet réalisé conformément au procédé selon l'une des revendications précédentes,
caractérisé en ce qu'il comprend un corps (1) muni d'un fond (5, 6, 7) sur lequel vient se raccorder un pied (9) comportant une première portion tubulaire (10) sensiblement coaxiale au corps dont une extrémité est solidarisée au corps, tandis que l'autre extrémité est prolongée par une deuxième portion (11) élastiquement déformable de façon bistable, cette deuxième portion (11) présentant une forme en col de cygne s'évasant vers le bas, pouvant se retrousser vers le haut pour constituer sous le corps (1) une cuvette annulaire assimilable à une soucoupe.

6. objet selon la revendication 5,
caractérisé en ce que le susdit corps (1) consiste en un récipient.

7. Objet selon la revendication 5 utilisable en tant que pot ou suspension horticole,
caractérisé en ce que le bord supérieur (12) de la portion en forme de soucoupe est situé à une hauteur supérieure à celle dudit fond (5), et en ce que ce dernier est muni de perçages (8) situés au-dessus de la cuvette annulaire.

8. Procédé selon la revendication 4,
caractérisé en ce que la phase de retroussage est effectuée à froid, hors du moule, de manière à ne pas ralentir la cadence de celui-ci.

9. Procédé selon la revendication 8,
caractérisé en ce que le pot peut servir à la culture des plantes, quand le pied-soucoupe est en position pied (basse) assurant par là un drainage optimal.

10. Procédé selon la revendication 8,
caractérisé en ce que le pied-soucoupe peut être mis en position soucoupe très facilement au moment de la vente de la plante, en appuyant fermement sur la collerette haute du pot, de haut en bas.

## Claims

1. Method for manufacturing an object in plastic material such as a horticultural pot comprising a body and a saucer-shaped base incorporated into the body, this method comprising the following phases:
- a first phase consisting in moulding the body (1) with an incorporated gooseneck-shaped base (9) comprising a tubular shape with bistable deformation characteristics, this shape being in a first stable state in which it extends downwardly flared,
- a second phase consisting in turning said tubular shape (11) upwards to bring it into a second stable state with inversion of the concavity to thus obtain a saucer-shaped base (9),
characterized in that the base comprises a tubular portion (10) of which one end is made integral with said body, whereas the other end is prolonged by said tubular shape (11) in order for the upward turning step to be able to take place outside of the mould by means of purely mechanical action causing said concavity to become inverted after the passing of a dead center.

2. Method as claimed in claim 1, characterized in that said body (1) is a receptacle.

3. Method as claimed in either claim 1 or claim 2, characterized in that the moulding performed during the first phase is carried out by means of a mould comprising:
- two half-inserts (13, 14) in the shape of half-shells which mould the lateral sides of the pot,
- a central insert (15) of which the shape complements that of the interior surface of the pot, and
- a base insert (16) of which the shape moulds that of the concavity delimited by the base (9).

4. Method as claimed in any one of the previous claims,
characterized in that said upward turning phase is performed by means of a purely mechanical piece of equipment comprising a means enabling the body to be maintained and a means enabling a relative displacement of the foot of the base (9) to be generated in the direction of said body (1).

5. Object manufactured according to the method as claimed in any one of the previous claims,
characterized in that it comprises a body (1) fitted with a bottom (5, 6, 7) to which a base (9) becomes joined, said base comprising a first tubular portion (10) that is substantially coaxial with the body and of which one end is made integral with the body, whereas the other end is prolonged by a second portion (11) that is elastically deformable in a bistable manner, this second portion (11) being in the shape of a downwardly-flared gooseneck and being susceptible of being turned upwards to constitute, beneath the body, an annular cuvette that can be assimilated with a saucer.

6. Object as claimed in claim 5,
characterized in that said body (1) consists of a receptacle.

7. Object as claimed in claim 5 susceptible of being used as a horticultural pot or suspension,
characterized in that the upper edge (12) of the saucer-shaped portion is situated at a level higher than that of said bottom (5), and in that the latter is fitted with holes (8) situated above the annular cuvette.

8. Method as claimed in claim 4,
characterized in that the upward turning phase is performed in the cold state, outside of the mould, so as not to slow down the moulding rate.

9. Method as claimed in claim 8,
characterized in that the pot can be used to grow plants when the saucer-base is in the base (lower) position, thereby ensuring optimum draining.

10. Method as claimed in claim 8,
characterized in that the saucer-base can be very easily put into the saucer position at the time of the sale of the plant, by firmly leaning on the upper rim of the pot, in the downward direction.

## Patentansprüche

1. Verfahren zur Herstellung eines Gegenstands aus Kunststoffmaterial, wie z.B. eines Blumentopfs, der einen Körper sowie einen Fuß in Form eines Untersetzers aufweist, der ein Teil mit dem Körper bildet, wobei dieses Verfahren die folgenden Schritte aufweist:
- einen ersten Verfahrensschritt, der darin besteht, den Körper (1) mit einem eingebauten Fuß (9) in Form eines Schwanenhalses zu gießen, der eine Rohrform mit bistabilen Verformungseigenschaften aufweist, wobei diese Form sich in einem ersten stabilen Zustand befindet, in dem sie sich nach unten ausweitet,
- einen zweiten Verfahrensschritt, der darin besteht, die Rohrform (11) umzustülpen, um sie in einen zweiten stabilen Zustand mit Umkehrung der konkaven Form zu bringen und so einen Fuß (9) in Form eines Untersetzers zu erhalten,
dadurch gekennzeichnet, daß der Fuß einen rohrförmigen Abschnitt (10) aufweist, von dem ein Ende fest mit dem Körper verbunden ist, während das andere Ende von der Rohrform (11) verlängert wird, so daß der Schritt des Umstülpens außerhalb der Gießform durch ein rein mechanisches Einwirken erfolgen kann, das die Umkehrung der konkaven Form nach Durchgang durch einen Totpunkt ermöglicht.

2. Verfahren nach Anspruch 1, dadurch gekennzeichnet, daß der Körper (1) ein Behälter ist.

3. Verfahren nach einem der Ansprüche 1 und 2, dadurch gekennzeichnet, daß das im ersten Verfahrensschritt durchgeführte Gießen mittels einer Gießform erfolgt, die aufweist:
- zwei halbe Formeinsätze (13, 14) in Form von Halbschalen, die den seitlichen Formen des Topfes entsprechen,
- einen zentralen Formeinsatz (14), dessen Form zu der der Innenfläche des Topfes komplementär ist,
- einen Basis-Formeinsatz (16), dessen Form der der vom Fuß (9) begrenzten konkaven Form entspricht.

4. Verfahren nach einem der vorhergehenden Ansprüche, dadurch gekennzeichnet, daß der Verfahrensschritt des Umstülpens mit Hilfe einer rein mechanischen Apparatur erfolgt, die Mittel, um den Körper zu halten, und Mittel aufweist, die es ermöglichen, eine relative Verschiebung der Basis des Fußes (9) in Richtung des Körpers (1) durchzuführen.

5. Gegenstand nach einem der vorhergehenden Ansprüche, dadurch gekennzeichnet, daß er einen Körper (1) mit einem Boden (5, 6, 7) aufweist, an den sich ein Fuß (9) anschließt, der einen ersten rohrförmigen Abschnitt (10) besitzt, der im wesentlichen koaxial zum Körper ist und von dem ein Ende fest mit dem Körper verbunden ist, während das andere Ende durch einen zweiten Abschnitt (11) verlängert wird, der in bistabiler Weise elastisch verformbar ist, wobei dieser zweite Abschnitt (11) die Form eines Schwanenhalses hat, der sich nach unten ausweitet und nach oben umgestülpt werden kann, um unter dem Körper (1) eine ringförmige Schale zu bilden, die wie ein Untersetzer ausgebildet ist.

6. Gegenstand nach Anspruch 5, dadurch gekennzeichnet, daß der Körper (1) aus einem Behälter besteht.

7. Gegenstand nach Anspruch 5, der als Blumentopf verwendbar ist, dadurch gekennzeichnet, daß der obere Rand (12) des Abschnitts in Form eines Untersetzers sich auf einer Höhe befindet, die über dem Boden (5) liegt und daß dieser Boden oberhalb der ringförmigen Schale mit Bohrungen (8) versehen ist.

8. Verfahren nach Anspruch 4, dadurch gekennzeichnet, daß der Schritt des Umstülpens kalt außerhalb der Gießform erfolgt, um die Geschwindigkeit der Gießvorgänge nicht zu verlangsamen.

9. Verfahren nach Anspruch 8, dadurch gekennzeichnet, daß der Topf zum Ziehen von Pflanzen dienen kann, wenn der untersetzerförmige Fuß sich in der (unteren) Fußstellung befindet, die eine optimale Entwässerung garantiert.

10. Verfahren nach Anspruch 8, dadurch gekennzeichnet, daß der untersetzerförmige Fuß beim Verkauf der Pflanze leicht in die Stellung eines Untersetzers gebracht werden kann, indem von oben nach unten fest auf den oberen Kragen des Topfes gedrückt wird.
